(19) Europäisches Patentamt
European Patent Office
Office européen des brevets

(11) Publication number: **0 258 641 B1**

# (12) EUROPEAN PATENT SPECIFICATION

(45) Date of publication of patent specification: **21.10.92**

(51) Int. Cl.$^5$: **G05B 19/23**

(21) Application number: **87111058.1**

(22) Date of filing: **30.07.87**

## (54) Velocity servo with position error correction.

(30) Priority: **01.08.86 US 891890**

(43) Date of publication of application:
**09.03.88 Bulletin 88/10**

(45) Publication of the grant of the patent:
**21.10.92 Bulletin 92/43**

(84) Designated Contracting States:
**DE FR GB IT**

(56) References cited:
**EP-A- 0 065 918** **EP-A- 0 070 654**
**EP-A- 0 076 590** **EP-A- 0 132 341**
**GB-A- 1 433 869** **GB-A- 2 000 610**
**GB-A- 2 061 554** **US-A- 4 245 297**

**PATENT ABSTRACTS OF JAPAN, vol. 8, no. 78 (E-237)[1515], 10th April 1984;& JP-A-58 224 581**

**PATENT ABSTRACTS OF JAPAN, vol. 9, no. 292 (P-406)[2015], 19th November 1985;& JP-A-60 129 811**

**IBM TECHNICAL DISCLOSURE BULLETIN, vol. 12, no. 12, May 1970, page 2156, New York, US; R.C. LAMY et al.: "Computer controlled grinder operation"**

(73) Proprietor: **LITTON INDUSTRIAL AUTOMATION SYSTEMS, INC.**
**20 East Sixth Street**
**Waynesboro PA 17268(US)**

(72) Inventor: **McCarney, David A.**
**11 Eastland Circle**
**Waynesboro Pa. 17268(US)**
Inventor: **Norrie, George O.**

**Deceased(US)**
Inventor: **Norrie Ann**
**10968 Old Forge Road**
**Waynesboro Pa. 17268(US)**

(74) Representative: **TER MEER - MÜLLER - STEINMEISTER & PARTNER**
**Mauerkircherstrasse 45**
**W-8000 München 80(DE)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a servo circuit for a velocity-controlled servo motor as disclosed in document EP-A-0 070 654. Such a servo circuit comprises

- a velocity profile generator including means for generating an analogue velocity command and a commanded position pulse train,
- a servo drive package including a servo motor and a feedback loop including a tachometer coupled to said servo motor and supplying a feedback signal to said servo motor,
- means for generating an analogue position error signal including a pulse generator coupled to said servo motor for detecting the current position of said servo motor,
- a position error counter to which said commanded position pulse train and a feedback pulse train from said pulse generator are supplied, said position error counter comprising means for comparing the commanded position pulse train and said feedback pulse train for generating a digital output representative of the difference between the commanded and current positions of said servo motor,
- digital-to-analogue converter means for transforming the digital output of said position error counter to an analogue position error signal, and
- means for driving said servo drive package including an operational amplifier for summing said analogue velocity command and said analogue position error signal whereby said servo motor will be driven with simultaneously derived velocity commands and position error signals.

Whereas conventional velocity control servo motors in particular for use in tool machines such as cylindrical grinding machines speed by ramping up and ramping down through following errors, it is an object of the present invention to drive a velocity-controlled servo motor with position and velocity commands derived simultaneously from a single data source with higher reproduceable accuracy. The velocity servo will be accordingly operated in such a way that it will instantaneously track both velocity and distance commands.

A servo circuit for a velocity-controlled servo motor as defined above is characterized in that

- said commanded position pulse train and said feedback pulse train from said pulse generator are supplied to said position error counter via an anti-coincidence circuit and an input reversal circuit,
- the output of said position error counter, following digital-to-analogue transformation by said digital-to-analogue converter, is supplied to said operational summing amplifier via a polarity reversal circuit, and in that
- the switching action of said input reversal circuit and said polarity reversal circuit are controlled by a polarity control circuit supplied at respective inputs thereof with said feedback pulse train and said commanded position pulse train after passing said anti-coincidence circuit.

Other objects and advantages of the present invention will become apparent from the accompanying drawings which illustrate a presently preferred embodiment incorporating the principles of the invention.

Referring to the drawings:

Figure 1 is an electronic block diagram illustrating a velocity servo forming part of a servo circuit in accordance with the teachings of the present invention;

Figure 2 is an electronic block diagram illustrating a portion of an embodiment of the invention;

Figure 3 is an electronic diagram illustrating the details of the polarity reversal circuit illustrated in Figure 2; and

Figure 4 is an electronic block diagram illustrating an alternate embodiment of a portion of another alternate embodiment of the velocity servo with position error correction made in accordance with the teachings of the present invention.

The velocity profile generator 1 includes profile generator PROMs 2 which direct command data sets 3 to a divide by N circuit 4 which is driven by the clock frequency (See U.S. Patent No. 4,402,161). The divide by N circuit 4 transforms the command data sets 3 into the command pulse train containing position and instantaneous velocity intelligence which is directed to a frequency to voltage converter (F/V) 5 which extracts velocity information 6. The output voltage or velocity command 6 of the frequency to voltage converter (F/V) 5 is directed to the servo drive package 7 which inlcudes a velocity servo motor 8.

The servo drive package 7 also includes a feed back or velocity loop including a tachometer 9 coupled to the velocity servo motor 8 for stabilizing the speed of the servo motor 8. Also coupled to the motor 8 is a pulse generator 10 which supplies a feedback pulse train to the "down-count" side of a position error counter 11. The command pulse train which is directed to the frequency to voltage converter (F/V) 5, is simultaneously connected to the "up-count" side of the position error counter 11. The number of counts in the position error counter 11 will, acccordingly, equal the difference between the position commanded and the actual position of the velocity servo motor 8. When the servo motor 8 has not advanced the number of pulses supplied by the velocity profile generator 1, a nullity will not exist at the position error counter 11. Such a digital difference will be converted to an analog voltage by a digital to analog converter (D/A) 12, and this position error signal will be summed with the velocity command by an operation amplifier 13 to drive the servo motor 8 with velocity and position error commands derived simultaneously from a signal data source. Such an arrangement will also maintain the correct motor position should the velocity be zero. The input to the servo drive package 7 will accordingly be the velocity command and a value proportional to the positional error of the servo motor 8.

In Figure 2, the feedback pulse train is directed to an anti-jitter circuit 14 and then to a four input anti-coincidence circuit 15. The command pulse train is also directed to this four input anti-coincidence circuit 15. The outputs (the command and feedback pulse trains) of the four input anti-coincidence circuit 15 are conjointly connected to a polarity control 16 and to an input reversal circuit 17 which supplies up-counts and down-counts to the position error counter 11.

In operation, assuming the first pulse to the polarity control 16 and to the input reversal circuit 17 is a command pulse, the command pulses will pass through the input reversal circuit 17 across the upper parallel path to up count the position error counter 11. Feedback pulses will be passed through the lower parallel path to down-count the position error counter 11. A positive difference (the command pulses exceeding the feedback pulses) will be converted to an analog form in the D/A converter 12 and a polarity circuit 18 will define the positive polarity thereby defining the position error signal.

The details of the polarity reversal circuit 18 are illustrated in Figure 3. This circuit includes a pair of alternately operable switches 19,20 and a voltage inverter 21. The polarity signal will operate these switches 19,20 to change the polarity of the position error signal as desired.

When the count of the position error counter 11 is reduced to zero, the polarity control will be enabled. Should the next pulse be a command pulse, the condition of the input reversal circuit 17 and the polarity reversal circuit 18 will remain unchanged, and the command and feedback pulses will be processed in the same manner. Should, however, this next pulse be a feedback pulse, the condition of these two reversal circuits 17,18 will change, and the feedback pulse will up-count the position error counter 11 while the command pulses will down-count the position error counter 11 until the count is again reduced to zero. The generated position error signal will now have a negative polarity as defined by the polarity reversal circuit 18.

This circuitry prevents the position error counter 11 from passing through zero to the negative range (The position error counter 11 is always up-counted). Less circuitry is required and good monotonicity is achieved.

When the count of the position error counter 11 is again reduced to zero, the polarity control 16 will again be enabled. Should the next pulse to the polarity control 16 be a feedback pulse, the condition of the input reversal circuit 17 and the polarity reversal circuit 18 will remain unchanged. Should, however, the next pulse be a command pulse, the polarity control will conjointly reverse the input reversal circuit 17 and the polarity reversal circuit 18. The command pulse will accordingly up-count the position error counter 11 and the feedback pulses will down-count the position error counter 11.

Another modification is illustrated in Figure 4. Here the command data lines 19 generated by the profile generator PROMs 2 are simultaneously directed to the divide by N circuit 4 and to a digital to analog converter (D/A) 20. The command data lines 19 are connected to the digital to analog converter (D/A) 20 in the normal numerical significance to generate the velocity command of the divide by N circuit 4.

## Claims

**1.** A servo circuit for a velocity controlled servo motor, comprising
- a velocity profile generator (1) including means for generating an analogue velocity command (6) and a commanded position pulse train (23),
- a servo drive package (7) including a servo motor (8) and a feedback loop including a tachometer (9) coupled to said servo motor (8) and supplying a feedback signal to said servo motor (8).
- means for generating an analogue position error signal (22) including a pulse generator (10) coupled to said servo motor (8) for detecting the current position of said servo motor (8),
- a position error counter (11) to which said commanded position pulse train (21) and a feedback pulse train from said pulse generator (10) are supplied, said position error counter (11) comprising means for comparing the commanded position pulse train and said feedback pulse train for generating a digital output representative of the difference between the commanded and current positions of said servo motor,

- digital-to-analogue converter means (12) for transforming the digital output of said position error counter (11) to an analogue position error signal (22), and
- means for driving said servo drive package (7) including an operational amplifier (13) for summing said analogue velocity command (6) and said analogue position error signal (22) whereby said servo motor (8) will be driven with simultaneously derived velocity commands and position error signals, **characterized in** that
- said commanded position pulse train and said feedback pulse train from said pulse generator (10) are supplied to said position error counter (11) via an anti-coincidence circuit (15) and an output reversal circuit (17),
- the output of said position error counter (11), following digital-to-analogue transformation by said digital-to-analogue converter (12), is supplied to said operational summing amplifier (13) via a polarity reversal circuit (18), and in that
- the switching action of said input reversal circuit (17) and said polarity reversal circuit (18) are controlled by a polarity control circuit (16) supplied at respective inputs thereof with said feedback pulse train and said commanded position pulse train after passing said anti-coincidence circuit (15).

## Patentansprüche

**1.** Servoschaltung für einen geschwindigkeitsgeregelten Servomotor, mit
   - einem Geschwindigkeitsprofilgenerator (1) mit einer Einrichtung zum Erzeugen eines analogen Geschwindigkeitssollwerts (6) und eines Sollpositions-Pulszugs (23),
   - einer Servotreiber-Baueinheit (7) mit einem Servomotor (8) und einer Rückkopplungsschleife mit einem Tachometer (9), das mit dem Servomotor (8) verbunden ist und ein Rückkopplungssignal an den Servomotor (8) liefert,
   - einer Einrichtung zum Erzeugen eines analogen Positionsabweichungssignals (22), mit einem Pulsgenerator (6), der mit dem Servomotor (8) verbunden ist, um die Istposition des Servomotors (8) zu ermitteln,
   - einem Positionsabweichungszähler (11), dem der Sollpositions-Pulszug (21) und ein Rückkopplungspulszug vom Pulsgenerator (10) zugeführt werden, welcher Positionsabweichungszähler (11) eine Einrichtung zum Vergleichen des Sollpositionspuls-Zuges mit dem Rückkopplungspulszug aufweist, um ein digitales Ausgangssignal zu erzeugen, das für die Differenz zwischen der Soll- und der Istposition des Servomotors repräsentativ ist,
   - einer D/A-Wandlereinrichtung (12) zum Umwandeln des digitalen Ausgangssignals des Positionsabweichungszählers (11) in ein analoges Positionsabweichungssignal (22), und
   - einer Einrichtung zum Antreiben der Servoantriebs-Baueinheit (7), mit einem Operationsverstärker (13) zum Aufsummieren des analogen Geschwindigkeitssollwerts (6) und des analogen Positionsabweichungssignals (22), wodurch der Servomotor (8) mit gleichzeitig ermittelten Geschwindigkeitssollwerten und Positionsabweichungssignalen betrieben wird, **dadurch gekennzeichnet,** daß
   - der Sollpositions-Pulszug und der Rückkopplungspulszug vom Pulsgenerator (10) dem Positionsabweichungszähler (11) über eine Antikoinzidenzschaltung (15) und eine Eingangssignal-Umkehrschaltung (17) zugeführt werden,
   - das Ausgangssignal des Positionsabweichungszählers (11) nach einer D/A-Umwandlung durch den D/A-Wandler (12) dem summierenden Operationsverstärker (13) über eine Polaritätsumkehrschaltung (18) zugeführt wird, und daß
   - der Umschaltbetrieb der Eingangssignal-Umkehrschaltung (17) und der Polaritätsumkehrschaltung (18) durch eine Polaritätssteuerschaltung (16) gesteuert werden, die an jeweiligen Eingängen mit dem Rückkopplungspulszug und dem Sollpositions-Pulszug nach Durchlaufen der Antikoinzidenzschaltung (15) versorgt wird.

## Revendications

**1.** Circuit d'asservissement pour un servomoteur à vitesse commandée, comportant
   - un générateur de profil de vitesse (1) comprenant des moyens pour générer une commande de vitesse analogique (6) et un train d'impulsions de position commandée (23),
   - un boîtier de commande d'asservissement (7) comprenant un servomoteur (8) et une boucle de rétroaction comprenant un tachymètre (9) couplé audit servomoteur (8) et délivrant un signal de rétroaction audit servomoteur (8),

- des moyens pour générer un signal d'erreur de position analogique (22), comprenant un générateur d'impulsions (10) couplé audit servomoteur (8) pour détecter la position présente dudit servomoteur (8),
- un compteur d'erreur de position (11) auquel sont appliqués ledit train d'impulsions de position commandée (21) et un train d'impulsions de rétroaction provenant dudit générateur d'impulsions (10), ledit compteur d'erreur de position (11) comportant des moyens pour comparer le train d'impulsions de position commandée et ledit train d'impulsions de rétroaction pour générer un signal de sortie numérique représentatif de la différence entre les positions commandée et présente dudit servomoteur,
- des moyens de conversion numérique-analogique (12) pour transformer le signal de sortie numérique dudit compteur d'erreur de position (11) en un signal d'erreur de position analogique (22), et
- des moyens pour commander ledit boîtier de commande d'asservissement (7) comprenant un amplificateur opérationnel (13) pour effectuer la somme dudit signal analogique de commande de vitesse (6) et dudit signal analogique d'erreur de position (22) de telle sorte que ledit servomoteur (8) soit excité par des signaux de commande et d'erreur de position dérivés simultanément, caractérisé en ce que
- ledit train d'impulsions de position commandée et ledit train d'impulsions de rétroaction provenant dudit générateur d'impulsions (10) sont appliqués audit compteur d'erreur de position (11) par l'intermédiaire d'un circuit à anticoïncidence (15) et d'un circuit d'inversion de sortie (17),
- le signal de sortie dudit compteur d'erreur de position (11), après transformation numérique-analogique par ledit convertisseur numérique-analogique (12), est délivré audit amplificateur opérationnel de sommation (13) par l'intermédiaire d'un circuit d'inversion de polarité (18), et en ce que
- l'action de commutation dudit circuit d'inversion (17) du signal d'entrée et dudit circuit d'inversion de polarité (18) sont commandées par un circuit de commande de polarité (16) alimenté à ses bornes d'entrée respectives par ledit train d'impulsions de rétroaction et par ledit train d'impulsions de position commandée après passage à travers ledit circuit à anticoïncidence (15).

FIG.1

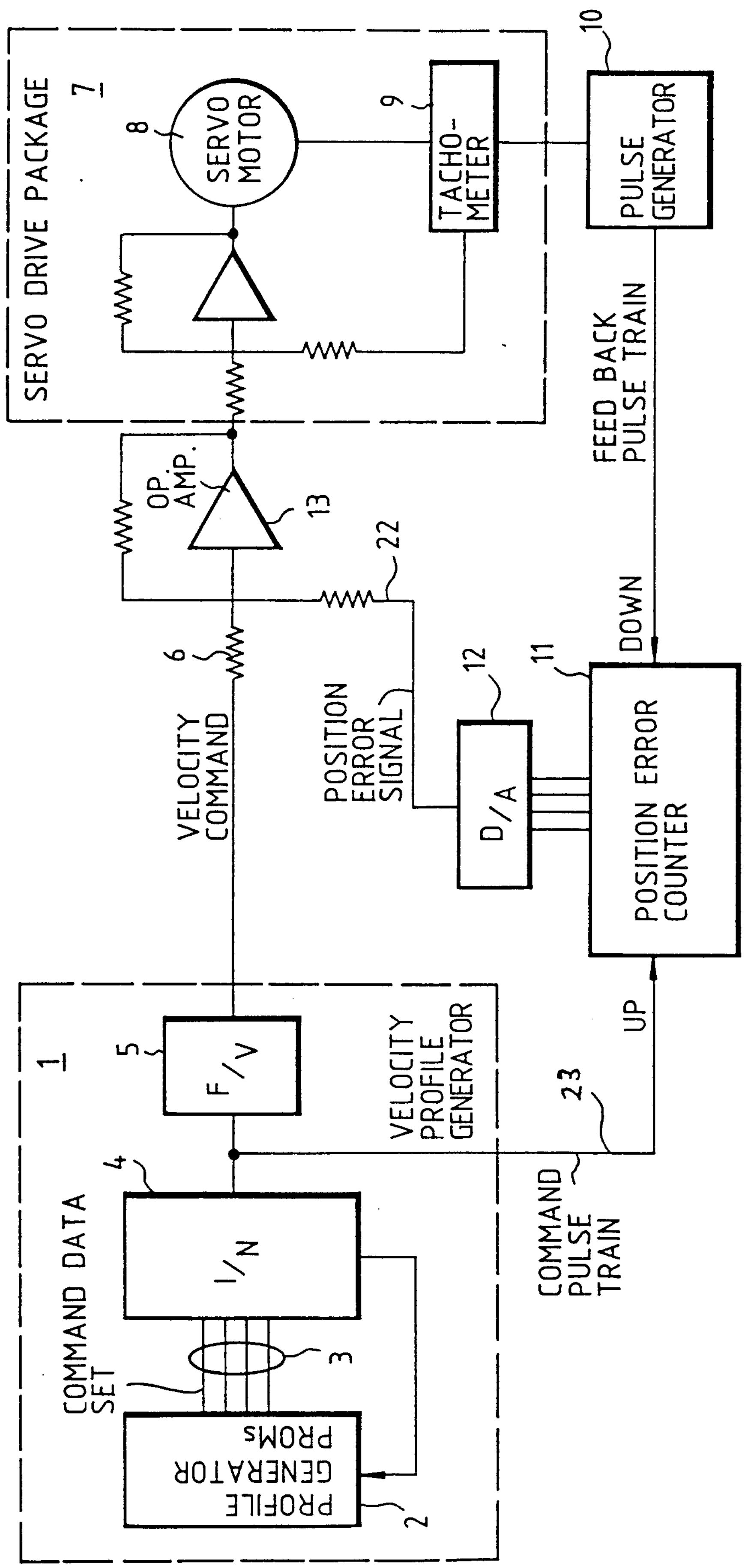
SERVO DRIVE PACKAGE
7
SERVO MOTOR
8
9
TACHO-METER
10
PULSE GENERATOR
FEED BACK PULSE TRAIN
DOWN
OP. AMP.
13
22
6
VELOCITY COMMAND
POSITION ERROR SIGNAL
12
D/A
11
POSITION ERROR COUNTER
UP
1
5
F/V
VELOCITY PROFILE GENERATOR
23
4
COMMAND DATA
I/N
COMMAND PULSE TRAIN
COMMAND DATA SET
3
PROFILE GENERATOR PROMs
2

FIG. 2

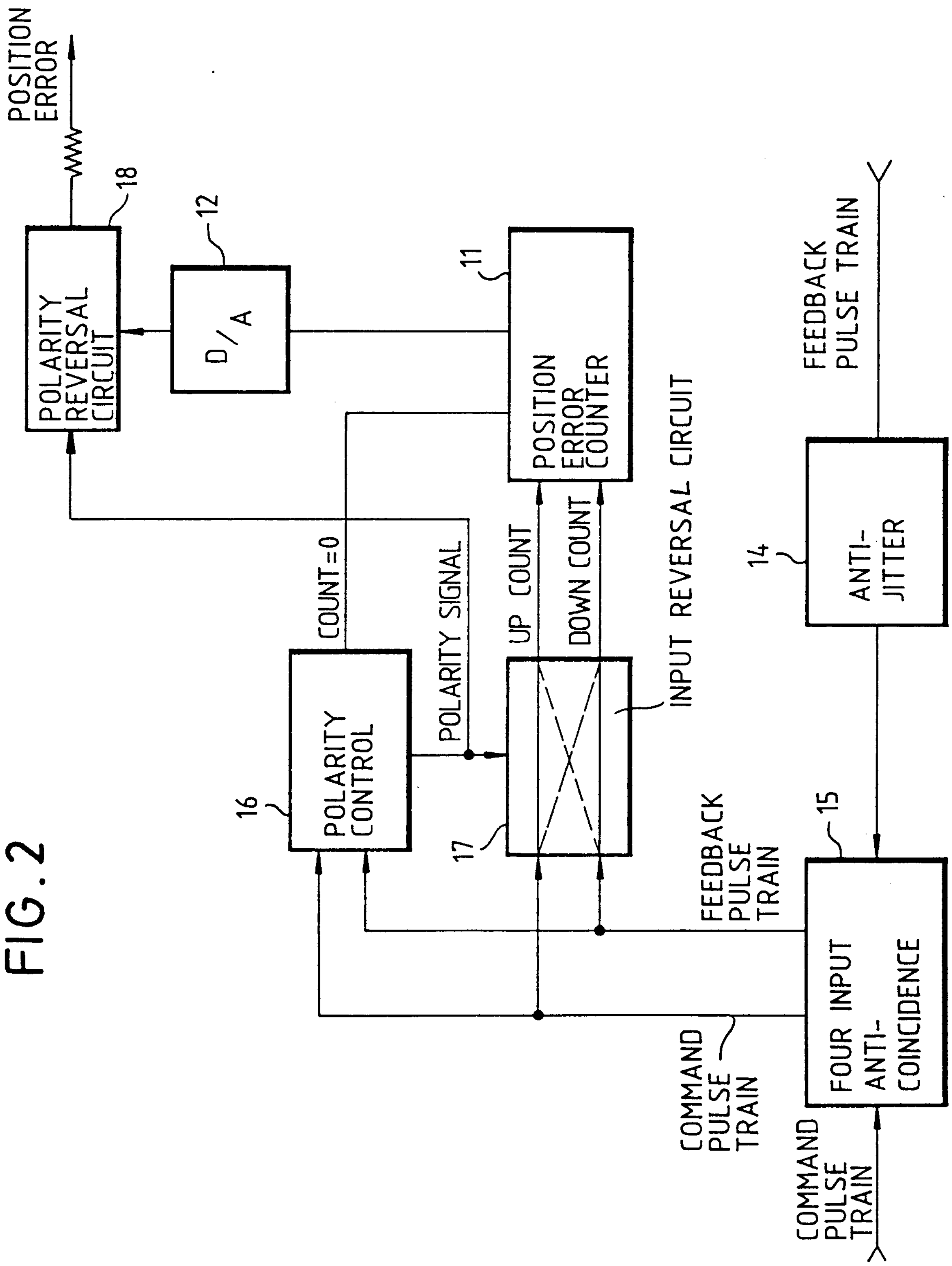
POSITION ERROR
18
POLARITY REVERSAL CIRCUIT
12
D/A
11
POSITION ERROR COUNTER
COUNT=0
POLARITY SIGNAL
UP COUNT
DOWN COUNT
INPUT REVERSAL CIRCUIT
16
POLARITY CONTROL
17
FEEDBACK PULSE TRAIN
14
ANTI-JITTER
15
FOUR INPUT ANTI-COINCIDENCE
COMMAND PULSE TRAIN
COMMAND PULSE TRAIN
FEEDBACK PULSE TRAIN

FIG.3

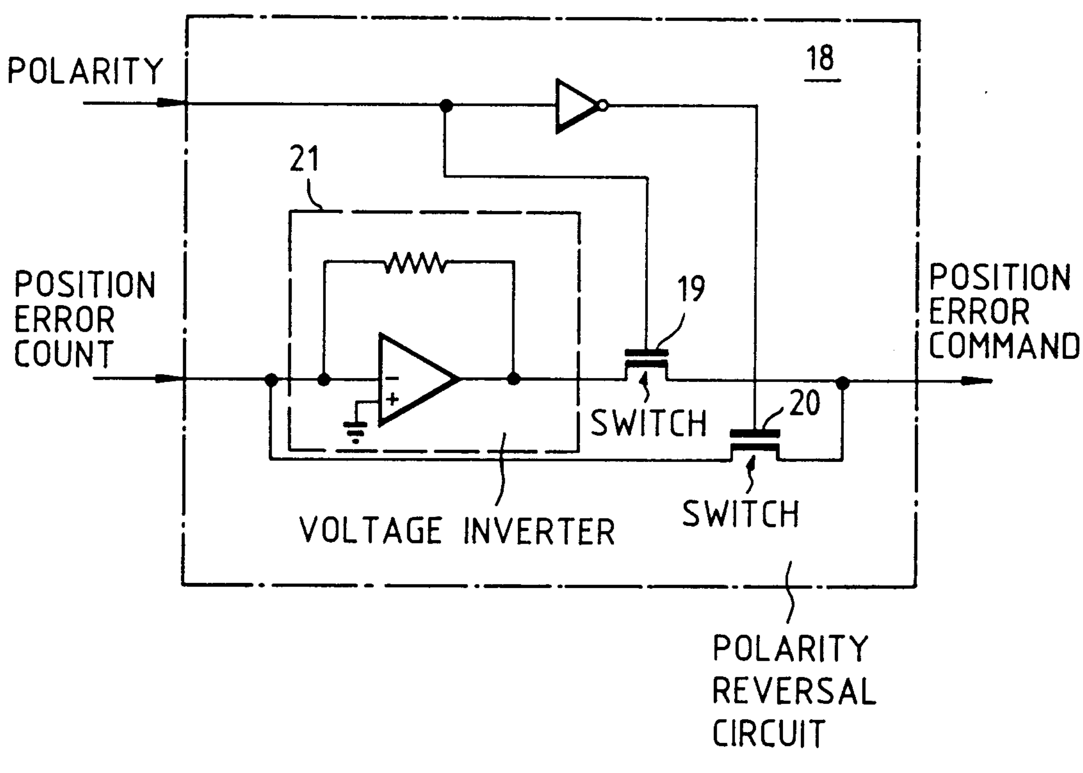
POLARITY
18
21
POSITION
ERROR
COUNT
19
POSITION
ERROR
COMMAND
SWITCH
20
SWITCH
VOLTAGE INVERTER
POLARITY
REVERSAL
CIRCUIT

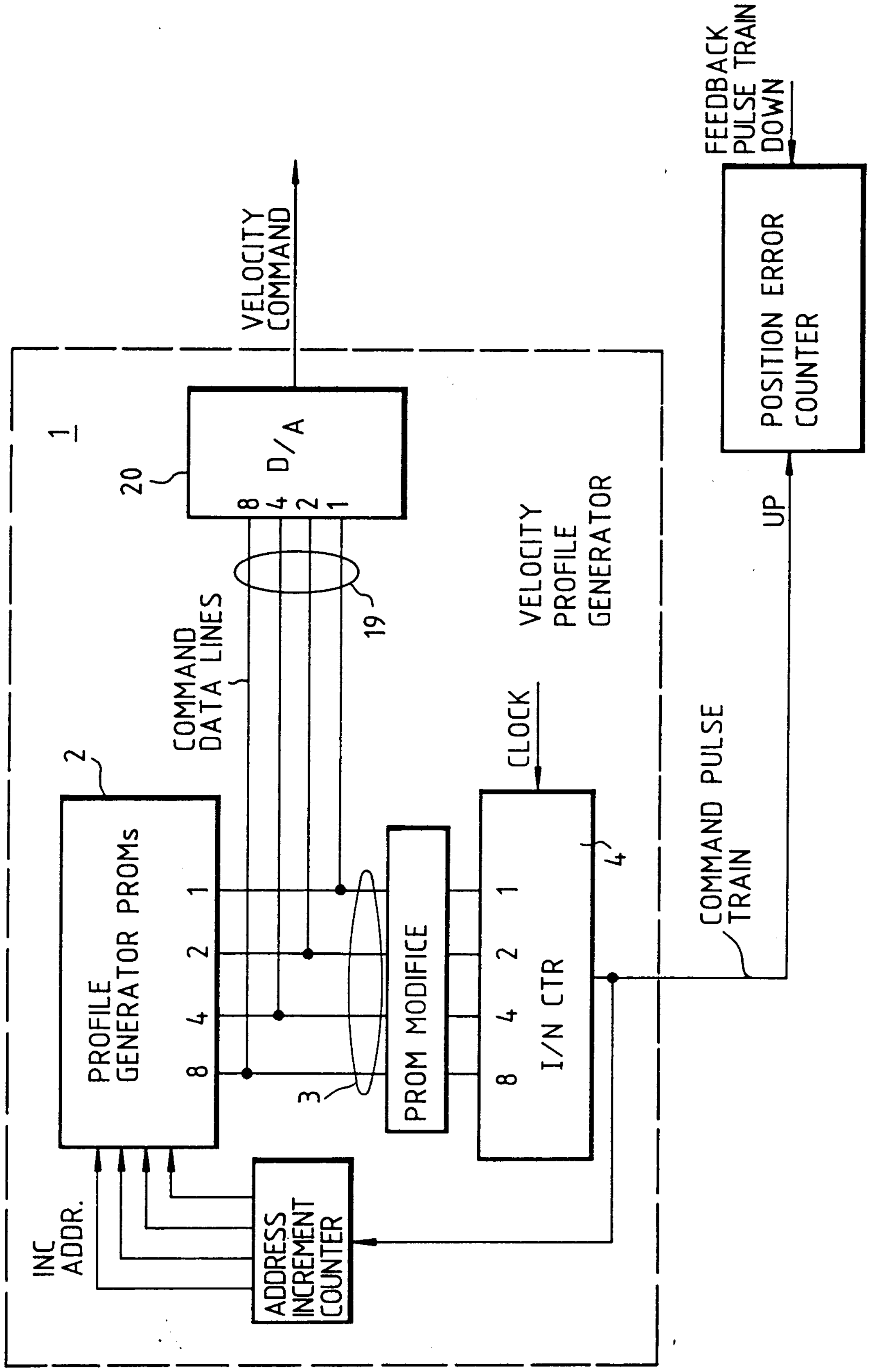
VELOCITY COMMAND
FEEDBACK PULSE TRAIN DOWN
POSITION ERROR COUNTER
UP
1
20
D/A
8 4 2 1
19
VELOCITY PROFILE GENERATOR
COMMAND DATA LINES
CLOCK
COMMAND PULSE TRAIN
2
PROFILE GENERATOR PROMs
1 2 4 8
PROM MODIFICE
1 2 4 8
I/N CTR
4
3
ADDRESS INCREMENT COUNTER
INC ADDR.

FIG. 4